# EUROPEAN PATENT APPLICATION

(11) **EP 2 894 368 A1**
(43) Date of publication of application: **15.07.2015**
(21) Application number: 14195434.7
(22) Date of filing: 28.11.2014
(51) Int. Cl.: F16F 9/54, F16F 9/02

(54) **Gas springs support plate**

(30) Priority: 11.12.2013 ES 201331806
(71) Applicant: Azol-Gas, S. L., 01015 Vitoria-Gasteiz, Álava (ES)
(72) Inventor: Alejos Perez, Oscar, 01015 VITORIA-GASTEIZ (ALAVA) (ES); Ramos Diaz De Guerenu, Edorta, 01015 VITORIA-GASTEIZ (ALAVA) (ES)
(74) Representative: Pons Ariño, Angel

(57) **Abstract**

A gas spring bearing plate destined for receiving the impact of the gas spring and is capable of moving along a plane perpendicular to the axis of movement and capable of tilting to adapt to the working angle of the gas spring. It comprises a support part (1) destined for being joined to a die disposed in opposition to the gas spring, having a cylindrical inner cavity wherein at least one sliding part (2) is disposed surrounded by an elastic part (3) that can move in a horizontal direction, a tilting part (4) disposed on the sliding part (2) and destined for tilting thereon, and a height compensation part (5) which is elastic and is disposed surrounding the tilting part (4) and is destined for allowing the tilting movement thereof.

## Description

### OBJECT OF THE INVENTION

The present invention can be included in the technical field of gas springs and, more specifically, of bearing plates of said gas springs, with possibility of movement and tilting.

### BACKGROUND OF THE INVENTION

Gas springs are applied in sheet metal forming processes, limiting the force exerted thereupon and enabling movement of the forming implements by slightly increasing said force.

The dies where these gas springs are installed usually have a guidance mechanism adequate to their functions, although certain parts thereof may nonetheless oscillate slightly within their vertical movement actuated by the press. This type of oscillations are, in general, caused by floating holders used to secure the sheet metal while working thereon or due to vibrations of the die itself on exerting a very localised and not fully compensated force on a part thereof.

To date, in order to solve this problem a spherical surface is built on the edge of the moving axis, which allows a certain angular oscillation of the bearing on the gas spring and allows a certain movement due to the smaller coefficient of friction of those surfaces, although said surface may leave marks on the die, deforming it and reducing the punch-load travel.

### DESCRIPTION OF THE INVENTION

The present invention proposes a bearing plate whereupon the gas spring exerts force during operation thereof. The advantages of the described bearing plate include its capability to move along a plane perpendicular to the axis of movement and/or to tilt so as to adapt to the working angle of said gas spring.

The key is to allow at least one of those movements within the bearing plate, for which purpose said bearing plate comprises at least one sliding part or one tilting part.

The sliding part is capable of moving in any direction along a plane parallel to that of the plate (perpendicular to the axis of movement of the gas spring). This part may have a concave cavity in the shape of a spherical section to house the tilting part when the plate comprises the two parts (the tilting part has a convex surface which also has a spherical section of the same radius and which allows tilting thereof).

The bearing plate is disposed on the part of the die whereagainst the gas spring rod strikes, in the manner of an intermediate part, and can absorb deviations from the angle of incidence, sideways movements or the two movements combined.

In the embodiment that only comprises the tilting part, when the surface of the gas spring rod exerts force upon the surface of the tilting part, this part can tilt with respect to an additional part that acts as a support and houses it, thereby enabling it to orient itself perfectly in the direction of force of the gas spring.

If, in the embodiment that only comprises the sliding part, the gas spring is compressed, a lateral force is exerted upon the gas spring rod or upon the part whereto the bearing plate is fixed, the sliding part moves sideways until annulling the force that causes said movement.

In the embodiment that comprises the two parts, the two deviations can be absorbed.

### DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:

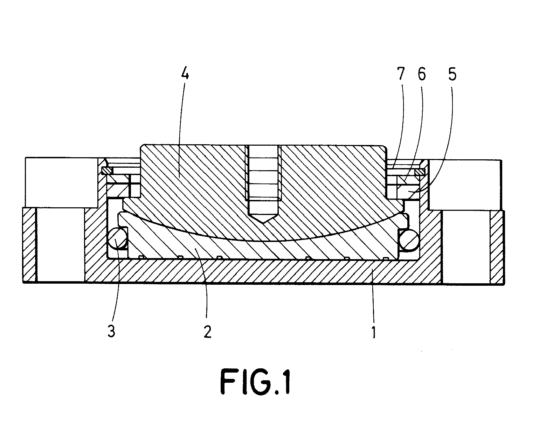

Figure 1 shows a cross-sectional view of the gas spring bearing plate.

### PREFERRED EMBODIMENT OF THE INVENTION

In light of figure 1, following is an example of embodiment of the gas spring bearing plate of the invention.

The gas spring bearing plate is destined for receiving the blow of the gas spring. It comprises a bearing part (1) destined for being joined to a die disposed in opposition to the gas spring. The support part is preferably joined to the part of the die whereupon the gas spring would exert force in the absence of the described bearing plate by means of screws.

The bearing part (1) comprises an inner cylindrical cavity wherein at least one sliding part (2) or tilting part (4) are disposed.

The sliding (2) part is cylindrical and is supported on a base of the inner cavity. This sliding part (2) can slide in a horizontal direction to compensate possible sideways movements of the gas spring. This is achieved through an elastic part, preferably an O-ring seal (3) that is disposed around the sliding part (2).

Therefore, the sliding part (2) is not in contact with the walls of the inner cavity of the bearing part but rather there is a space therebetween which allows the movement of the sliding part (2) in a horizontal direction. The O-ring seal (3), on being elastic, ensures that the sliding part (2) is centred after each strike cycle of the gas spring. The upper side of the sliding part (2) is concave and in the shape of a spherical section.

The tilting part (4) has a lower convex side that is disposed in correspondence with the upper concave side of an additional part that rests on the base of the part or forms a part thereof. The convex spherical section of the tilting part (4) has the same radius as the spherical section of the concave upper side of the additional part. Therefore, the tilting part (4) can tilt on the additional part to correct deviations from the angle of incidence of the gas spring.

Likewise, a height compensation part (5) is disposed in the inner cavity to allow the movement of the tilting part (4). The tilting part (4) can tilt about the additional part, the tilting part (4) ascends up one side and descends down the opposite side. The height compensation part (5) is elastic and has a ring-shaped configuration and is disposed around the tilting part (4) to allow the described movement.

In a preferred embodiment of the invention, the additional part is the sliding part (2). In this case, the tilting part (4) and the sliding part (2) are disposed on the bearing plate. In this embodiment, said sliding part (2) comprises a concave surface on its upper side to receive the tilting part (4).

Preferably, a fixing part (6) is additionally disposed in the inner cavity of the bearing part (1) which has a ring-shaped configuration and is metallic. It is disposed on the height compensation part (5) and is destined for securing it in place.

In another preferred embodiment, the gas spring bearing part additionally comprises an elastic ring (7) around the tilting part (4), closing the inner cavity of the bearing part (1). The function of said elastic ring (7) is maintaining the other parts in the interior of the bearing part (1).

## Claims

1. A gas spring bearing plate comprising a bearing part (1), **characterised in that** the bearing part (1) comprises a cylindrical inner cavity wherein at least one sliding part (2) or one tilting part (4) are disposed, wherein:
- the sliding part (2) is cylindrical and rests on a base of the inner cavity and is surrounded by an elastic part (3) and is able to move in horizontal direction,
- the tilting part (4) has a lower convex side disposed in correspondence with the concave upper side of an additional part that rests on the base of the inner cavity or that forms part thereof, and can tilt on the additional part,
and in the cylindrical inner cavity is also disposed a height compensation part (5) which is elastic and has a ring-shaped configuration.

2. A gas spring bearing plate, according to claim 1, **characterised in that** a fixing part (6) is additionally disposed on the bearing part, which has a ring-shaped configuration and is metallic and is disposed on the height compensation part (5).

3. A gas spring bearing plate, according to claim 1, **characterised in that** in the bearing plate is additionally disposed an elastic ring (7) around the tilting part (4).

4. A gas spring bearing plate, according to claim 1, **characterised in that** the elastic part (3) is an O-ring seal.
